# EUROPEAN PATENT SPECIFICATION

(11) **EP 1 751 925 B1**
(45) Date of publication and mention of the grant of the patent: **18.11.2009**
(21) Application number: 05740724.9
(22) Date of filing: 13.05.2005
(51) Int. Cl.: H04L 12/40

(54) **DATA TRANSFER METHOD IN A DISTRIBUTED PROCESS CONTROL SYSTEM**
DATENTRANSFERVERFAHREN IN EINEM VERTEILTEN PROZESSSTEUERSYSTEM
UN PROCÉDÉ DE TRANSFERT DES DONNÉES DANS UN SYSTÈME DE RÉGULATION RÉPARTI

(30) Priority: 01.06.2004 FI 20045202
(43) Date of publication of application: 14.02.2007
(73) Proprietor: Wärtsilä Finland Oy, 65380 Vaasa (FI)
(72) Inventor: JUPPO, Pasi, FI-65200 Vaasa (FI)
(74) Representative: Finnilä, Kim Larseman
(86) International application number: PCT/FI2005/050159
(87) International publication number: WO 2005/119974

(56) References cited:
- US-A1- 2004 010 349
- US-A1- 2004 042 401
- US-B1- 6 629 247

## Description

The present invention relates to a method in the data transfer of a distributed process control system as described in the preamble of claim 1, in which a number of the modules of the control system are arranged in data transfer connection with each other over bus using CAN (Controller Area Network) protocol.

The invention also relates to a method in the data transfer of a distributed process control system as described in the preamble of claim 6 and a computer program in the data transfer of a distributed process control system as described in the preamble of claim 9.

CAN (Controller Area Network) bus is widely used in the data transfer of a number of process control systems for different processes and devices, such as cars, work machines and robots. CAN bus is inherently a multi-master bus and its basic specification is specified in e.g. standard ISO 11989. Each node, i.e. module, of a CAN bus can independently send a message to the bus. The message can be read by all modules and only modules that are, e.g. programmed to operate in that way, receive the message.

CAN specification as such, however, needs a lot of programming work in applications and it is also relatively inflexible in functionality. In it, e.g. the identifier part of each message is completely defined in advance already during the programming phase and/or configuration phase of the system. It is, however, very common that the process conditions vary and in this case the importance of various functions in the process control also varies. Taking this into account in the known CAN specification is possible only when predetermined, i.e. all necessary identifier parts must configured in advance, making the system inflexible.

CAN bus is also used in the control of internal combustion engines. As the importance of the engine control has been increased because of, among others, more stringent emissions goals, the known CAN specification does not operate so as to allow a sufficiency flexible and powerful engine control. In engines, a number of measurement and control devices are needed in a relatively small space. Thus, the data transfer capacity must be sufficient.

Prior art document US2004/0042401 discloses a CAN communication device assigning data-transmission priorities.

An object of the invention is to accomplish a method in the data transfer of a distributed process control system, in which a number of modules belonging to the control system are arranged in data transfer connection with each other using CAN (Controller Area Network) protocol via bus and in which method the modules send and receive messages containing at least the identifier part and the information part of the message signal, the method improving the operation of the known process control system.

An especial aim of the invention is to produce a control system for an internal combustion engine, by means of which the engine control can be made fast and thereby a stable, safe and efficient operation of the engine can be achieved.

The aims of the invention are mainly achieved as disclosed in the appended claims 1, 6 and 9 and disclosed in more detail in other claims.

In a method in data transfer of a distributed process control system according to the invention, in which system a number of the modules of process control system are arranged in data transfer connection with each other using the CAN (Controller Area Network) protocol via bus, in which method the modules send and receive messages containing at least the identifier part and the information part of the message, with the identifier part of the message being formed dynamically at least partly in the sending module. The method comprises a phase in which the information part of the message being formed in the module is compared to the set value or set value window and in case the information part differs from the set value or set value window by more than a predetermined amount, the priority of the message to be formed is changed. This allows the requirements of the process to be taken better into consideration as necessary in each case and also in a rather simple manner.

Preferably at least the address data of the module receiving the message is included in the identifier part, whereby the speed of message processing is increased. Preferably the address data of the sending module is as well included in the identifier part, whereby the origin of each message can be read from the message. According to the invention, the part defining the address data of the module receiving the message is individually formed for each message. It is additionally preferable to internally divide the address data of the identifier part into two parts, the most significant part of which specifies the group of the target of the message and the least significant part of which specifies the target of the message within the group. This allows the message to be targeted to a certain group or groups, thereby also reducing the unnecessary load of the bus and, most importantly, reducing processing load in devices for which the message is not meant.

According to the invention, a part defining the priority is first formed into the identifier part, subsequent to which the address date of the receiving module, the address data of the sending module and the data part are formed. Thus it is possible to address the data to only one module or modules, thereby avoiding unnecessary processor loading of the modules, which increases the operation speed of the system.

The method is especially suitable for use in the control of the operation of an internal combustion engine. The method comprises steps in which the data part of the message to be formed is compared to the set value or preset value window of a information part stored in the module and in case the information part deviates from the set value or set value window by more than is predetermined, the priority value of the message to be formed is increased, whereby a fast delivery of the data can be ensured. In this case the information part comprises data about the measurement value of the operation of the internal combustion engine. Additional advantages are achieved by dividing the engine into operational groups and correspondingly in the operation of the control system, information about each operational group meant as the receiver of each message is included into the address data of the information part of the messages when forming the message.

A computer program according to another embodiment of the invention in the data transfer of a distributed process control system, in which a number of the modules of the control system are arranged in data transfer connection applying the CAN (Controller Area Network) protocol with each other over the bus, includes a section for forming messages for the CAN bus, the messages containing at least the identifier part and the information part of the message. According to the invention the said section of the computer program forms a value of the identifier part of the message on the basis of the value or values set into the information part of the message for having an effect on the processing of the message. Preferably the said section of the computer program forms the value of the priority of the identifier part of the message.

Several advantages are achieved by means of the invention. Most importance can be placed on the fact that by dynamically setting the identifier part the transmission of messages can be effectively influenced on the bus, which is important in connection with especially malfunction situations. Further, the invention allows increasing the safety and stability of the process control system and the apparatus controlled therewith. In addition to this, the data transfer capacity of the bus is increased and unnecessary process loading is avoided.

In the following the invention is described by way of example and with reference to the appended drawings, of which
figure 1 illustrates an application according to the invention in connection with an internal combustion engine,
figure 2 illustrates a message produced by the method according to the invention,
figure 3 illustrates a module of figure 1 that can be connected to a CAN bus, and
figure 4 illustrates a diagram of a method according to the invention.

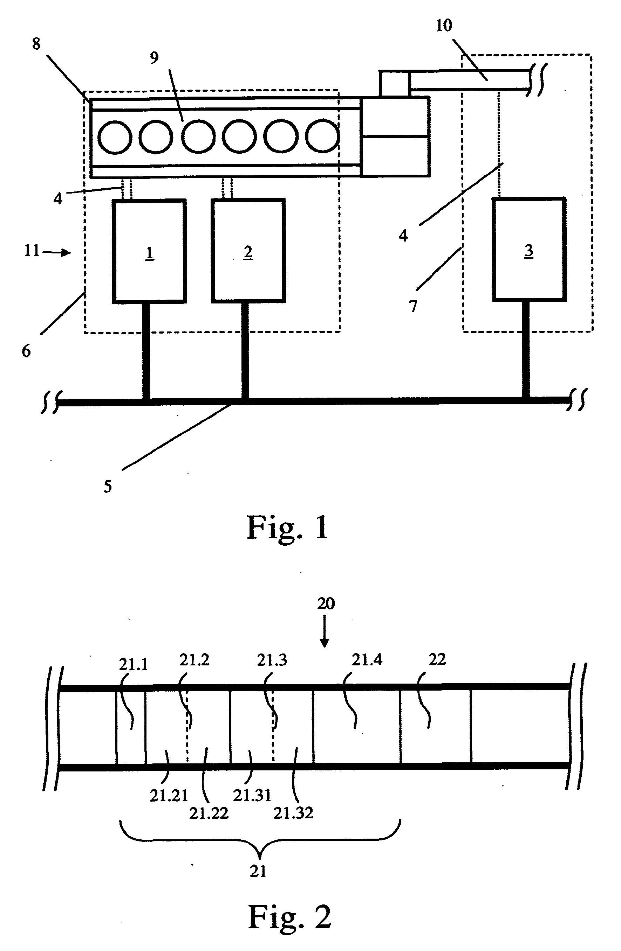

Figures 1 schematically illustrates a piston engine 8. The construction of the engine is divided into functional groups, such as the cylinders 9 and exhaust gas system 10 illustrated here. A process control system 11 is arranged in connection with the engine, the system being also divided into groups to accomplish the control of certain functional groups of the engine. Here, modules 1 and 2 are schematically shown to belong to the cylinder group 6. An exhaust gas group 7 of the process control system 11 is arranged to control the exhaust gas system, the exhaust gas group here consisting of one module 3. The modules can act as transmitters of, among others, measurement and control data and also accomplish the control of the actual process. The modules are arranged in data transfer control with each other using CAN (Controller Area Network) protocol via bus 5. The bus can be, for example, of pair cable type, optical or other suitable solution. The modules are in connection to the actuators and/or measurement devices located in the engine 8 via conductors 4.

As the engine runs, each module 1, 2, 3 of the process control system executes the functions set and/or programmed for it in a way defined by the program stored in each module 1, 2, 3. The program stored in the modules and run therein forms the message itself and sends it to the bus. The program is such that it can form messages with different contents. According to the invention, the content of the so-called identifier part of the message is dynamically formed at least partly in the sending module as a response to the actual information of the process in connection with the module.

The structure of the message 20 formed by the module is exemplarily shown in figure 2. The message 20 always comprises an identifier part 21 and an information part 22. The data itself occurring on the bus comprises other parts as well, e.g. data relating to the CAN protocol. The identifier part 21 of the actual message 20 first comprises the part 21.1 determining the priority of the message. The processing of the message is determined on the basis of this in a situation where one or more modules is/are attempting to transfer data at the same time. In this case, the message to be transferred first is solved by comparing identifier parts so that the message having the smallest priority number goes first. The identifier part also includes the address 21.2. of the receiving module and the address 21.3 of the transmitting module. Finally, the identifier part comprises data part 21.4, subsequent to which is the information part 22 of the actual message. According to the CAN protocol the size of the identifier part of the message is preferably 29 bits. For example, three bits can be reserved for the priority 21.1 of the identifier part 21 and eight bits for each of the module addresses; thus data 21.4 can as well be included in the identifier part 21 of the message, in this case ten bits. Thus the data transfer capacity of the bus is considerably increased, whereby the performance of the modules is improved and thus also the operation of the engine is improved.

According to one embodiment of the invention the processing of the messages in the bus can be made essentially faster by including the address 21.2 of the receiving module in the identifier field of the message. This will considerably improve process control in applications requiring fast data transfer, such as a piston engine. The address data is formed as a two-part data, consisting of the most significant part 21.21 and the least significant part 21.22. The most significant part 21.21 of the address determines the group for which the message is meant to. In the case illustrated in figure 1 the module 3 can thereby send a message into which it generates the most significant part 21.21 of the address 21.2 of the receiving module such that it means the cylinder group 6. Thus, the message is in the first step only directed at this group, because other modules of the bus can detect right at the beginning of the transfer of the message that it is not addressed to them. The least significant part 21.22 determines the address to closer apply to either all modules 1 and 2 of the cylinder group 6 or only some of them. Thus, the same message can be directed to be read by a number of modules. Further, this simplifies and accelerates the processing of the message.

With reference to the illustration in figure 1, the engine process control system can be considerably improved by means of a preferable embodiment of the invention disclosed in the following as an application of exhaust gas temperature monitoring. It is obvious that the method can be applied to a number of other processes a well using a corresponding principle. In normal circumstances the module 3 of the exhaust gas group 7 sends to the bus for example with regular intervals the exhaust gas measurement value transmitted to the module 3. In normal conditions the program forms the identifier part 21 of the message 20 having a certain first priority value 21.1. According to the invention the value of the priority is individually formed for each message to be sent, in this case depending on the measurement value of the exhaust gas temperature available at module 3. In order to accomplish this a computer program has been stored in module 3 for controlling the operation of the module. The program forms the message to be sent to the bus in each case. The program includes a section for forming the identifier part dynamically, i.e. case by case, preferably depending on the value of the information part 22 of the message. The contents of the identifier part 21, in this example, depends on the exhaust gas temperature measurement value received by module 3. In a situation in which the exhaust gas temperature changes so as to be outside a certain predetermined limit value window, a computer program or its section being run in module 3 determines a second priority value for the priority value of the message, smaller than the previous values. Due to this, in the new situation the messages sent by module 3 receive a bus priority with a lower value, i.e. a higher priority in the sending hierarchy and they are sure to be sent in time. Thus the operation and data transfer of the CAN bus can be more efficiently adapted to correspond with the situation.

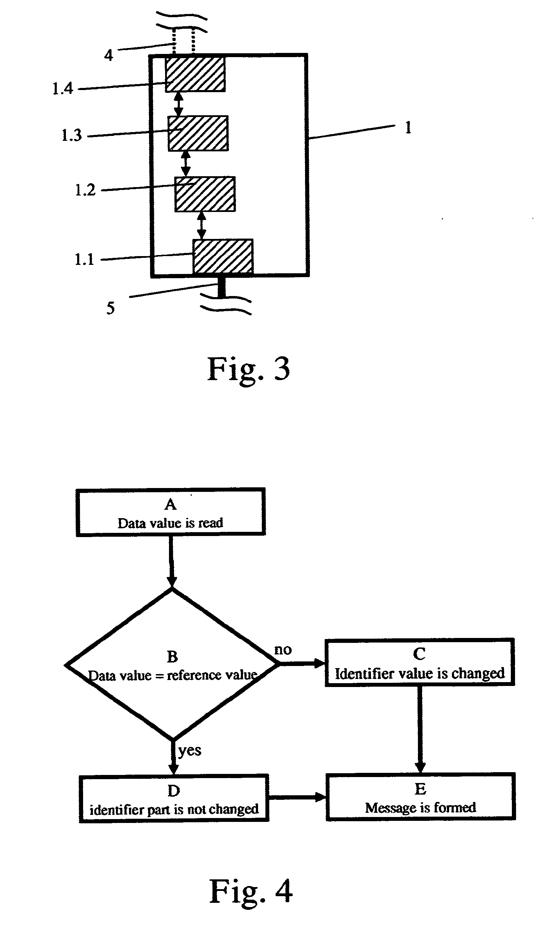

Figure 3 shows in more detail the module 1, connectable to CAN bus 5, shown in figure 1. In addition to the CAN bus, the module is connected to the process device in the module control via suitable conductors 4. For this, the module comprises a process interface unit 1.4, by means of which the module communicates with the process device. The module comprises at least a transmitter/receiver unit 1.1 of the message by means of which the module 3 communicates with the CAN bus. A module according to the invention additionally comprises an information value comparison unit 1.3, into which information about the measurement value or values is transferred by means of a process interface unit 1.4. The data value comparison unit 1.3 compares the measurement values of the process to the set value or set value window available to the comparison unit 1.3 and transfers reference data into the forming part of the identifier unit 1.2 included in the module, the forming part then forming the identifier part of the message on the basis of the reference data. The identifier part thus formed is connected to other parts of the message and delivered to the message transmitter/receiver unit 1.1. In the module, at least the forming part 1.2 of the identifier unit and the data value comparison unit 1.3 are preferably realized by means of a computer program.

Figure 4 shows a simplified version of the phases of the method according to the invention for producing a message containing a dynamic identifier part for CAN bus in a module connectable to the bus. In the first phase A a data value describing the status of the process is read from the process. Alternatively, the data value can in some cases be from a message originating from another module. In the next phase B the data value is compared with the predetermined comparison value. In case the data value differs from the comparison value the identifier part is changed, preferably priority-defining part thereof. If the there is no difference, the identifier part will not be changed. The message is formed subsequent to this. In the above, a certain range can be used instead of the comparison value, whereby the system checks whether the data value is inside or outside this value.

The invention is not limited to the embodiments described here, but a number of modifications thereof can be conceived of within the scope of the appended claims.

## Claims

1. A method in the data transfer of a distributed process control system (11), in which a number, of the modules (1, 2, 3) of the process control system (11) are arranged in data transfer connection with each other using CAN, Controller Area Network, protocol over bus (5), in which method the modules transmit and receive messages (20) containing at least an identifier part (21) and an information part (22) of the message, and in the method the contents of the identifier part (21) of each transmitted message is dynamically formed in the transmitting module (1, 2, 3) **characterised in that** the method comprises a phase in which the information part (22) of the message (20) being formed in the module (1, 2, 3) is compared to a set value or set value window and in case the information part (22) differs from the set value or set value window by more than a predetermined amount, a part of the identifier part (21) determining the priority of the message (20) to be formed is changed.

2. A method according to claim 1, **characterized in that** at least the address data (21.2) of the receiving module of each message is also included in the identifier part (21).

3. A method according to claim 2, **characterized in that** address data part (21.2) of the identifier part (21) defining the receiving module of each message is individually formed for each message to be transmitted.

4. A method according to claim 2 or 3, **characterized in that** the address data (21.3) of the transmitting module is as well included the address data of the identifier part (21.2, 21,3) and that the address data (21.2, 21.3) is internally divided in two parts (21.21, 21.22, 21.31, 21.32), of which the most significant (21.21: 21.31) part defines the group (6, 7) and the least significant part defines the target (1, 2, 3) within the group defined by the most significant group.

5. A method according to any of preceding claims, **characterized in that** the part defining the priority (21.1) is first formed into the identifier part, whereafter the address data (21.2) of the receiving module and the address data of the transmitting part (21.3) and the data part (21.4) are formed.

6. A method in the data transfer of a distributed process control system (11) of internal combustion engine (8), in which a number of the modules (1, 2, 3) of the process control system (11) controlling and/or monitoring the operation of an internal combustion engine are arranged in data transfer connection with each other using CAN, Controller Area Network, protocol over bus (5), in which method the modules transmit and receive messages (20) containing at least an identifier part (21) and an information part (22) of the transmitted message, and in the method the contents of the identifier part (21) of each transmitted message is dynamically formed at least partly in the transmitting module (1, 2, 3), **characterized in that** the method comprises a phase in which the information part (22) of the message (20) being formed in the module-(1, 2, 3) is compared to a set value or set value window stored in the module and in case the information part (22) differs from the set value or set value window by more than a predetermined amount, a part of the identifier part (21) determining the priority of the message (20) to be formed is changed.

7. A method according to claim 6, **characterized in that** the internal combustion engine is divided in functional groups (9, 10), each of which comprises at least one target and that in the method a reference to the receiving group or groups and target or targets is included in the message.

8. A method according to claim 7, **characterized in that** the inclusion of the reference in the message accomplished by forming identifier data (21.1) as a two-part data so that the most significant (21.21, 21.31) part defines the group (6, 7) and the least significant part defines the target (1, 2, 3) within the group defined by the most significant part.

9. A computer program for the data transfer of a distributed process control system (11), in which a number of the modules (1, 2, 3) of the control system (11) are arranged in data transfer connection with each other applying the CAN, Controller Area Network, protocol over the bus, the computer program including a section (1.2, 1.3) for forming messages for the CAN bus (5), the messages containing at least the identifier part (21) and the information part (22) of the message, **characterized in that** the said section (1.2, 1.3) of the computer program forms a value of the priority in the identifier part (21) of the message on the basis of value or values set into the information part of the message for having an effect on the processing of the message, by comparing the value or values with a set value or a set value window, and in case the information part (22) differs from the set value or set value window by more than a predetermined amount, the priority of the message to be formed is changed.

## Patentansprüche

1. Verfahren beim Datentransfer eines verteilten Prozesssteuerungssystems (11), in welchem eine Anzahl der Module (1, 2, 3) des Prozesssteuerungssystems (11) unter Verwendung des Steuergerätebereichsnetz- oder CAN-Protokolls über Bus (5) in Datentransferverbindung miteinander angeordnet ist, in welchem Verfahren die Module Nachrichten (20) senden und empfangen, die wenigstens einen Kennungsteil (21) und einen Informationsteil (22) der Nachricht enthalten, und in dem Verfahren die Inhalte des Kennungsteils (21) jeder gesendeten Nachricht im Sendemodul (1, 2, 3) dynamisch erstellt werden, **dadurch gekennzeichnet, dass** das Verfahren eine Phase umfasst, in welcher der Informationsteil (22) der Nachricht (20), die im Modul (1, 2, 3) erstellt wird, mit einem Sollwert oder Sollwertfenster verglichen wird, und ein Teil des Kennungsteils (21), der die Priorität der zu erstellenden Nachricht (20) bestimmt, geändert wird, falls der Informationsteil (22) sich vom Sollwert oder Sollwertfenster um mehr als einen vorgegebenen Betrag unterscheidet.

2. Verfahren nach Anspruch 1, **dadurch gekennzeichnet, dass** wenigstens die Adressdaten (21.2) des Empfangsmoduls jeder Nachricht auch in den Kennungsteil (21) aufgenommen werden.

3. Verfahren nach Anspruch 2, **dadurch gekennzeichnet, dass** der Adressdatenteil (21.2) des Kennungsteils (21), der das Empfangsmodul jeder Nachricht definiert, für jede zu sendende Nachricht individuell erstellt wird.

4. Verfahren nach Anspruch 2 oder 3, **dadurch gekennzeichnet, dass** die Adressdaten (21.3) des Sendemoduls ebenso die Adressdaten des Kennungsteil (21.2, 21.3) aufgenommen werden, und dass die Adressdaten (21.2, 21.3) intern in zwei Teile (21.21, 21.22, 21.31, 21.32) geteilt werden, von welchen der höchstwertige (21.21, 21.31) Teil die Gruppe (6, 7) definiert, und der niedrigstwertige Teil das Ziel (1, 2, 3) innerhalb der Gruppe definiert, die durch den höchstwertigen Teil definiert wird.

5. Verfahren nach einem der vorhergehenden Ansprüche, **dadurch gekennzeichnet, dass** zuerst der Teil, der die Priorität definiert (21.1), in den ersten Kennungsteil erstellt wird, woraufhin die Adressdaten (21.2) des Empfangsmoduls und die Adressdaten des Sendeteils (21.3) und der Datenteil (21.4) erstellt werden.

6. Verfahren beim Datentransfer eines verteilten Prozesssteuerungssystems (11) eines Verbrennungsmotors (8), in welchem eine Anzahl der Module (1, 2, 3) des Prozesssteuerungssystems (11), das den Betrieb eines Verbrennungsmotors steuert und/oder überwacht, unter Verwendung des Steuergerätebereichsnetz- oder CAN-Protokolls über Bus (5) in Datentransferverbindung miteinander angeordnet ist, in welchem Verfahren die Module Nachrichten (20) senden und empfangen, die wenigstens einen Kennungsteil (21) und einen Informationsteil (22) der Nachricht enthalten, und in dem Verfahren die Inhalte des Kennungsteils (21) jeder gesendeten Nachricht wenigstens teilweise im Sendemodul (1, 2, 3) dynamisch erstellt werden, **dadurch gekennzeichnet, dass** das Verfahren eine Phase umfasst, in welcher der Informationsteil (22) der Nachricht (20), die im Modul (1, 2, 3) erstellt wird, mit einem in dem Modul gespeicherten Sollwert oder Sollwertfenster verglichen wird, und ein Teil des Kennungsteils (21), der die Priorität der zu erstellenden Nachricht (20) bestimmt, geändert wird, falls der Informationsteil (22) sich vom Sollwert oder Sollwertfenster um mehr als einen vorgegebenen Betrag unterscheidet.

7. Verfahren nach Anspruch 6, **dadurch gekennzeichnet, dass** der Verbrennungsmotor in Funktionsgruppen (9, 10) unterteilt ist, die jeweils wenigstens ein Ziel umfassen und dass in dem Verfahren eine Bezugnahme auf die Empfangsgruppe oder -gruppen und das Ziel oder die Ziele in die Nachricht aufgenommen wird.

8. Verfahren nach Anspruch 7, **dadurch gekennzeichnet**, die Aufnahme der Bezugnahme in die Nachricht durch Erstellen von Kennungsdaten (21.1) als zweiteilige Daten bewerkstelligt wird, so dass der höchstwertige (21.21, 21.31) Teil die Gruppe (6, 7) definiert und der niedrigstwertige Teil das Ziel (1, 2, 3) innerhalb der Gruppe definiert, das durch den höchstwertigen Teil definiert wird.

9. Computerprogramm für den Datentransfer eines verteilten Prozesssteuerungssystems (11), in welchem eine Anzahl der Module (1, 2, 3) des Steuerungssystems (11) unter Anwendung des Steuergerätebereichsnetz- oder CAN-Protokolls über den Bus in Datentransferverbindung miteinander angeordnet ist, das Computerprogramm einen Abschnitt (1.2, 1.3) zum Erstellen von Nachrichten für den CAN-Bus (5) umfasst, und die Nachrichten (20) wenigstens den Kennungsteil (21) und den Informationsteil (22) der Nachricht enthalten, **dadurch gekennzeichnet, dass** der Abschnitt (1.2, 1.3) des Computerprogramms einen Wert der Priorität des Kennungsteils (21) der Nachricht auf der Basis eines Wertes oder von Werten, die in den Informationsteil der Nachricht gesetzt sind, durch Vergleichen des Wertes oder der Werte mit einem Sollwert oder einem Sollwertfenster erstellt, um eine Wirkung auf die Verarbeitung der Nachricht zu haben, und die Priorität der zu erstellenden Nachricht (20) geändert wird, falls der Informationsteil (22) sich vom Sollwert oder Sollwertfenster um mehr als einen vorgegebenen Betrag unterscheidet.

## Revendications

1. Procédé de transfert de données d'un système de commande de processus distribué (11), dans lequel un certain nombre de modules (1, 2, 3) du système de commande de processus (11) sont agencés en connexion de transfert de données l'un avec l'autre en utilisant le protocole CAN (Controller Area Network) sur le bus (5), dans lequel procédé les modules transmettent et reçoivent des messages (20) contenant au moins une partie d'identification (21) et une partie d'information (22) du message, et dans le procédé le contenu de la partie d'identification (21) de chaque message transmis est dynamiquement formé dans le module de transmission (1, 2, 3), **caractérisé en ce que** le procédé comprend une phase au cours de laquelle la partie d'information (22) du message (20) étant formée dans le module (1, 2, 3) est comparée à une valeur de consigne ou une fenêtre de valeurs de consigne et dans le cas où la partie d'information (22) diffère de la valeur de consigne ou de la fenêtre de valeurs de consigne de plus qu'une quantité prédéterminée, une partie de la partie d'identification (21) déterminant la priorité du message (20) à former est changée.

2. Procédé selon la revendication 1, **caractérisé en ce qu'**au moins les données d'adresse (21.2) du module de réception de chaque message sont également incluses dans la partie d'identification (21).

3. Procédé selon la revendication 2, **caractérisé en ce que** la partie de données d'adresse (21.2) de la partie d'identification (21) définissant le module de réception de chaque message est individuellement formée pour chaque message à transmettre.

4. Procédé selon la revendication 2 ou 3, **caractérisé en ce que** les données d'adresse (21.3) du module de transmission sont également incluses dans les données d'adresse de- la partie d'identification (21.2, 21.3) et **en ce que** les données d'adresse (21.2, 21.3) sont divisées en interne en deux parties (21.21, 21.22, 21.31, 21.32), dont la partie la plus significative (21.21 : 21.31) définit le groupe (6, 7) et la partie la moins significative définit la cible (1, 2, 3) à l'intérieur du groupe défini par le groupe le plus significatif.

5. Procédé selon l'une quelconque des revendications précédentes, **caractérisé en ce que** la partie définissant la priorité (21.1) est d'abord formée dans la partie d'identification, après quoi les données d'adresse (21.2) du module de réception et les données d'adresse de la partie de transmission (21.3) et de la partie de données (21.4) sont formées.

6. Procédé de transfert de données d'un système de commande de processus distribué (11) d'un moteur à combustion interne (8), dans lequel un certain nombre de modules (1, 2, 3) du système de commande de processus (11) commandant et/ou surveillant le fonctionnement d'un moteur à combustion interne sont agencés en connexion de transfert de données l'un avec l'autre en utilisant le protocole CAN (Controller Area Network) sur le bus (5), dans lequel procédé les modules transmettent et reçoivent des messages (20) contenant au moins une partie d'identification (21) et une partie d'information (22) du message transmis, et dans le procédé le contenu de la partie d'identification (21) de chaque message transmis est dynamiquement formé au moins partiellement dans le module de transmission (1, 2, 3), **caractérisé en ce que** le procédé comprend une phase au cours de laquelle la partie d'information (22) du message (20) étant formée dans le module (1, 2, 3) est comparée à une valeur de consigne ou une fenêtre de valeurs de consigne stockée dans le module et dans le cas où la partie d'information (22) diffère de la valeur de consigne ou de la fenêtre de valeurs de consigne de plus qu'une quantité prédéterminée, une partie de la partie d'identification (21) déterminant la priorité du message (20) à former est changée.

7. Procédé selon la revendication 6, **caractérisé en ce que** le moteur à combustion interne est divisé en groupes fonctionnels (9, 10), dont chacun comprend au moins une cible et **en ce que**, dans le procédé, une référence au groupe ou aux groupes de réception et à la cible ou aux cibles est incluse dans le message.

8. Procédé selon la revendication 7, **caractérisé en ce que** l'inclusion de la référence dans le message est accomplie en formant des données d'identification (21.1) en tant que données en deux parties de sorte que la partie la plus significative (21.21, 21.31) définit le groupe (6, 7) et la partie la moins significative définit la cible (1, 2, 3) à l'intérieur du groupe défini par la partie la plus significative.

9. Programme informatique pour le transfert de données d'un système de commande de processus distribué (11), dans lequel un certain nombre de modules (1, 2, 3) du système de commande de processus (11) sont agencés en connexion de transfert de données l'un avec l'autre en appliquant le protocole CAN (Controller Area Network) sur le bus, le programme informatique comprenant une section (1.2, 1.3) pour former des messages pour le bus CAN (5), les messages contenant au moins la partie d'identification (21) et une partie d'information (22) du message, **caractérisé en ce que** ladite section (1.2, 1.3) du programme informatique forme une valeur de la priorité dans la partie d'identification (21) du message sur la base de la valeur ou des valeurs réglées dans la partie d'information du message pour avoir un effet sur le traitement du message, en comparant la valeur ou les valeurs à une valeur de consigne ou à une fenêtre de valeurs de consigne, et dans le cas où la partie d'information (22) diffère de la valeur de consigne ou de la fenêtre de valeurs de consigne de plus qu'une quantité prédéterminée, la priorité du message à former est changée.
